# EUROPÄISCHE PATENTSCHRIFT

(11) **EP 1 886 036 B1**
(45) Veröffentlichungstag und Bekanntmachung des Hinweises auf die Patenterteilung: **15.09.2010**
(21) Anmeldenummer: 06762486.6
(22) Anmeldetag: 07.07.2006
(51) Int. Cl.: F16C 21/00

(54) **KOMBINIERTES WÄLZ- UND GLEITLAGER**
COMBINED ROLLING AND PLAIN BEARING
PALIER A ROULEMENT ET PALIER LISSE COMBINE

(30) Priorität: 11.07.2005 DE 102005032283
(43) Veröffentlichungstag der Anmeldung: 13.02.2008
(73) Patentinhaber: META MOTOREN- UND ENERGIE-TECHNIK GMBH, D-52134 Herzogenrath (DE)
(72) Erfinder: KREUTER, Peter, 52072 Aachen (DE); BEY, Ralf, 52076 Aachen (DE)
(74) Vertreter: Kramer - Barske - Schmidtchen
(86) Internationale Anmeldenummer: PCT/EP2006/006678
(87) Internationale Veröffentlichungsnummer: WO 2007/006510

(56) Entgegenhaltungen:
- EP-A- 0 940 592
- DE-A1- 3 429 692
- DE-A1- 10 311 851
- DE-A1- 10 344 804
- US-A- 3 301 611
- US-A- 4 394 091

## Beschreibung

Die Erfindung betrifft ein kombiniertes Wälz- und Gleitlager.

Hydrodynamische Gleitlager zeichnen sich durch hohe Tragkräfte aus, wenn ausreichende Drehzahlen bzw. Relativgeschwindigkeiten zwischen Außenschale und Innenschale vorhanden sind und eine gute Schmierung sichergestellt ist. Wälzlager haben gegenüber Gleitlagern ein erheblich geringeres Tragvermögen, da die im Idealfall je nach Form der Wälzkörper vorhandenen Punkt- oder Linienberührungen bei hohen Tragkräften zu elastischen Verformungen führen, die die Langzeitstabilität des Lagers beeinträchtigen.

Zur Lagerung eines Pleuels am Hubzapfen einer Kurbelwelle einer Brennkraftmaschine sowie zur Lagerung der Kurbelwelle selbst im Motorgehäuse werden im Allgemeinen hydrodynamische Gleitlager eingesetzt, da diese ein ausreichendes Tragvermögen haben, um die insbesondere infolge des Verbrennungsdrucks im Zylinder entstehenden hohen Radialkräfte ohne Beeinträchtigung ihrer Langzeithaltbarkeit aufzunehmen.

In der DE 103 11 851 A1 ist eine Schwenklagerung mit einem Außenring, der an einem Auge einer Blattfeder eines Blattfederstapels eingepresst ist, beschrieben. Auf einem Bolzen, der fest mit einem Chassis eines LKW verbunden ist, sind ein erster Innenring und ein zweiter Innenring aufgepresst, die von einer Abstandhülse in gegenseitigem, definiertem Abstand gehalten werden. Der Außenring weist eine erste Laufbahn und eine dazu axial beabstandete zweite Laufbahn auf. Der erste Innenring und der zweite Innenring sind mit jeweils einer entsprechenden inneren Laufbahn ausgebildet. Zwischen den Laufbahnen sind ein erster Satz von Zylinderrollen und ein zweiter Satz von Zylinderrollen angeordnet. Radiale Spalten zwischen dem Außenring und dem ersten Innenring sowie dem zweiten Innenring sind nach außen durch Dichtringe abgedichtet, zwischen denen das Lager mit Schmiermittel, insbesondere einem Fett, gefüllt ist. Im axialen Bereich zwischen der ersten äußeren Laufbahn und der zweiten äußeren Laufbahn ist der Außenring mit einer radial einwärts gerichteten Verdickung ausgebildet, die so nahe an die Abstandshülse heranreicht, dass zwischen der inneren Mantelfläche des Außenrings 1 und der äußeren Mantelfläche der Hülse ein ringförmiger Spalt mit einer radialen Weite von vorzugsweise zwischen 30 und 60 µm ausgebildet ist. In dem radial an den Spalt angrenzenden Bereich ist auf der äußeren Mantelfläche der Hülse 6 eine Beschichtung aus einem Gleitmaterial aufgebracht. Die innere Mantelfläche des Außenrings und die äußere Mantelfläche der Hülse bilden somit ein Gleitlager mit einem Spiel von vorzugsweise zwischen 30 und 60 µm. Durch die zusätzlich vorhandenen Schräg-Zylinderrollenlager ist das Gleitlager infolge des Spiels bei den vorwiegend herrschenden Betriebsbedingungen außer Funktion, da die Schräg-Zylinderrollenlager den Außenring und die Hülse mit hoher Präzision zentrieren. Bei starken Radiallasten kommt es zu einer Verformung des Außenrings und infolge davon zu einer Berührung zwischen der inneren Mantelfläche des Außenrings und der Beschichtung der äußeren Mantelfläche der Hülse. Eine weitergehende Verformung kann nur noch in dem sehr geringen Maß erfolgen, in dem die Beschichtung zusammengedrückt wird. Da überwiegend lediglich die Schräg-Zylinderrollenlager tragen und das Gleitlager über die Gleitbeschichtung verfügt, ist es möglich, das Schwenklager mit einer Lebensdauerschmierung zu versehen und wartungsfrei zu gestalten. Bei Schwenklagern der beschriebenen Bauweise treten nur kleine Relativverdrehungen zwischen den aneinander gelagerten Bauteilen auf, die zudem verhältnismäßig langsam sind.

Die US 3 301 611 A, von der im Oberbegriff des Anspruchs 1 ausgegangen wird, beschreibt ein Gleitlager, das zwischen einem Kurbelzapfen und einem Pleuelauge angeordnet ist. Das Gleitlager ist durch eine Lagerbuchse gebildet, die gleichzeitig einen Käfig mit einer Anzahl von Taschen bildet, innerhalb derer Wälzkörper angeordnet sind. Der Käfig ist gegenüber dem Abstand zwischen der Außenfläche des Kurbelzapfens und der Innenfläche des Pleuelauges mit Untermaß ausgebildet, so dass bei normaler radialer Belastung ein Ringspalt besteht und die Wälzkörper die Funktion einer Wälzlagerung übernehmen. Bei steigender Last werden die Wälzkörper, die beispielsweise als hohle Kugeln ausgebildet sind, verformt, so dass der Käfig in Anlage an eine der Gegenflächen kommt und ein an der anderen Gegenfläche ausgebildeter, mit Öl gefüllter Schmierspalt hydrodynamische Trag- und Schmierfunktion übernimmt.

Der Erfindung liegt die Aufgabe zugrunde, eine reibungsgünstige und verschleißarme Lagerung insbesondere auch für solche Einsatzgebiete zu schaffen, bei denen die Lagerung zweier relativ zueinander mit hohen Geschwindigkeiten drehenden Bauteilen hohen Radialkraftschwankungen ausgesetzt ist.

Eine Lösung dieser Aufgabe wird mit einem kombinierten Wälz- und Gleitlager gemäß dem Anspruch 1 erzielt.

Die Unteransprüche sind auf vorteilhafte Ausführungen und Weiterbildungen des erfindungsgemäßen kombinierten Wälz- und Gleitlagers gerichtet.

Das erfindungsgemäße kombinierte Wälz- und Gleitlager kann vorteilhaft überall dort eingesetzt werden, wo die zwischen relativ zueinander drehenden Bauteilen wirkenden Radialkräfte großen Schwankungen unterliegen. Besonders gut eignet sich das erfindungsgemäße kombinierte Wälz- und Gleitlager zum Einsatz für die Pleuel- und die Kurbelwellenlagerung in Hubkolbenbrennkraftmaschinen.

Die Erfindung wird im Folgenden anhand schematischer Zeichnungen beispielsweise und mit weiteren Einzelheiten erläutert.

In den Figuren stellen dar:
- Figur 1: einen Schnitt senkrecht zur Drehachse A der Lagerung eines Pleuels an einem Hubzapfen einer Kurbelwelle,
- Figur 2: eine Detailansicht eines Schnittes in der Ebene II-II der Figur 1,
- Figur 3: eine Detailansicht X der Figur 2,
- Figur 4: eine Detailansicht X der Figur 2 in gegenüber der Figur 3 abgeänderter Ausführungsform,
- Figur 5: eine vergrößerte Teilansicht der Figur 1 bei niedrig belastetem Wälzla- gerteil,
- Figur 6: eine Ansicht ähnlich der Figur 5 bei hoch belastetem Wälzlager,
- Figur 7: eine Ansicht ähnlich der Figur 3 einer weiteren abgeänderten Ausfüh- rungsform,
- Figur 8: eine Ansicht ähnlich der Figur 2 einer abgeänderten Ausführungsform eines kombinierten Lagers und
- Figuren 9 bis 11: Ansichten ähnlich der Figur 3 unterschiedlicher kombinierter Lager.

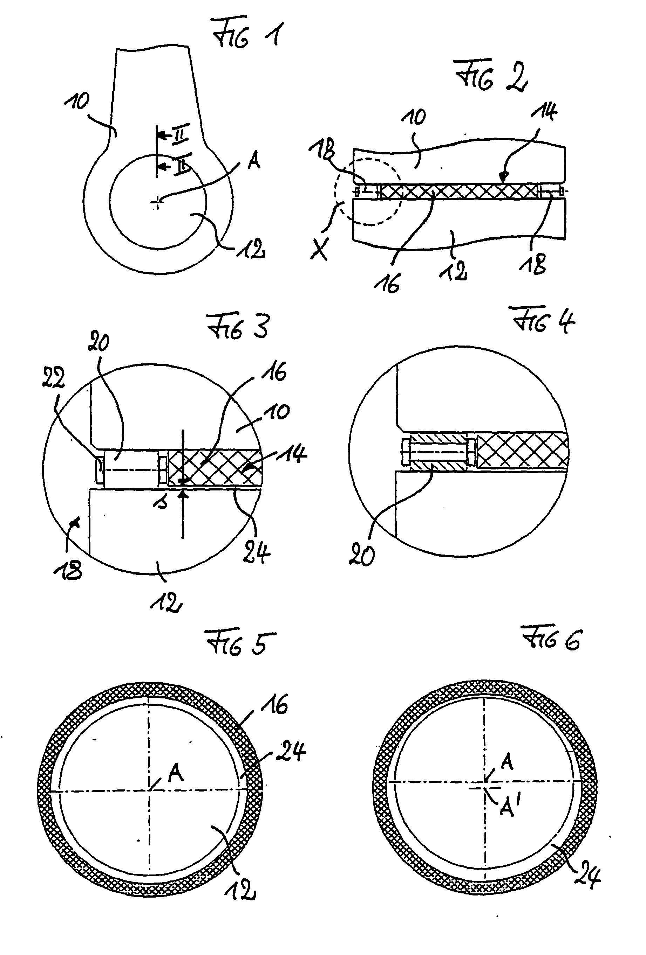

Figur 1 zeigt im Schnitt senkrecht zur Drehachse A ein Auge eines Pleuels 10, das auf dem Zapfen 12 einer Kurbelwelle einer Brennkraftmaschine gelagert ist.

Figur 2 zeigt einen Teilschnitt durch die Anordnung gemäß Figur 1 in der Ebene II-II in vergrößerter Darstellung. Gemäß Figur 2 erfolgt die Lagerung des Pleuels 10 auf dem Kurbelzapfen 12 mit Hilfe eines Gleitlagers 14, dessen eine Lagerschale 16 aus einem geeigneten Lagermetall besteht und in das das den Kurbelzapfen 12 umgebende Pleuelauge eingesetzt ist. Die andere Lagerschale des Gleitlagers 14 ist unmittelbar durch die entsprechende Gegenfläche des Kurbelzapfens gebildet. Beidseitig des Gleitlagers 14 sind Wälzlager 18 angeordnet.

Figur 3 zeigt den Ausschnitt X der Figur 2 in vergrößerter Darstellung. Wie ersichtlich, ist der radiale Abstand zwischen der konvexen Außenfläche des Kurbelzapfens 12 und der konkaven Innenfläche des Auges des Pleuels 10 durch den Durchmesser von zylindrischen Wälzkörpern 20 des Wälzlagers 18 gegeben, die von einem Lagerkäfig 22 in gegenseitigem Abstand gehalten werden.

Die radiale Dicke der Lagerschale 16 des Gleitlagers ist derart bemessen, dass ein Schmierspalt 24 der Dicke s verbleibt, dem in an sich bekannter Weise Schmiermittel beispielsweise durch die Kurbelwelle hindurch zugeführt wird.

Je nach Konstruktion des Kurbeltriebs kann das Pleuel zweiteilig mit verschraubtem Pleuelauge oder einteilig ausgebildet sein. Die Lagerschale 16 und das Wälzlager 18 können in Umfangsrichtung ein- oder mehrteilig ausgebildet sein.

Bei dem Wälzlager 18 der Figur 3 sind die Wälzkörper 20 massiv zylindrisch, wohingegen bei der Ausführungsform gemäß Figur 4 hohlzylindrische Wälzkörper 20 verwendet werden. Diese zylindrische Ausbildung kann für eine leichtere elastische Verformbarkeit des Wälzlagers bei radialer Belastung genutzt werden.

Der Aufbau der beidseitig des Gleitlagers angeordneten Wälzlager sowie des Gleitlagers ist an sich bekannt und wird daher nicht im Einzelnen erläutert.

Figur 5 zeigt einen Ausschnitt der Figur 1 unter Bezugnahme auf die Figuren 3 und 4 in größerem Maßstab. Dargestellt sind die in dem Auge des Pleuels 10 aufgenommene Lagerschale 16, die zusammen mit dem Pleuel 10 um die Achse A relativ zum Kurbelzapfen 12 drehbar ist. Die Dicke s des Schmierspalts 24 ist längs des gesamten Umfangs konstant und durch den Durchmesser der Wälzkörper 20 definiert, über die sich das Pleuel am Kurbelzapfen abstützt und die im Normalzustand des Lagers bzw. bei verhältnismäßig geringer radialer Belastung der Lagerung die Lagerfunktion übernehmen. Die Dicke des Spaltes 24 im Zustand der Lagerung gemäß Figur 5 ist verhältnismäßig groß, so dass im Schmierspalt 24 enthaltenes Schmiermittel keine dynamische Tragfunktion übernimmt.

Wenn das Pleuel 10 beispielsweise bei einem Verbrennungstakt mit einer großen in den Figuren von oben her wirkenden Kraft auf den Kurbelzapfen 12 drückt, werden die beidseitig des Gleitlagers 14 (Figur 2) angeordneten Wälzlager 18, deren Wälzkörper normalerweise weitgehend nur Linienberührung mit den Gegenflächen des Pleuels und des Kurbelzapfens haben, elastisch verformt, wodurch sich die normalerweise gleichachsig mit der Achse A des Kurbelzapfens verlaufende Achse des Pleuelauges nach unten in die Lage A' (Figur 6) verschiebt und die Dicke des Schmierspalts 24 im gemäß Figur 6 oberen Bereich der Lagerung abnimmt, so dass das Gleitlager 14 zusätzliche Tragfunktion übernimmt, wobei die Tragkraft des Gleitlagers deutlich größer als die der Wälzlager ist. Auf diese Weise werden die Wälzlager vor einer deren Lebensdauer und Funktion beeinträchtigenden Überlastung geschützt und übernimmt das Gleitlager zusätzliche Tragfunktion. Wenn die vom Pleuel her wirkenden Kräfte abnehmen, wird der Zustand gemäß Figur 5 wieder erreicht, in dem nur die Wälzlager tragen.

Mit der beschriebenen Anordnung wird erreicht, dass in Belastungszuständen der Lagerung, die zu keiner wesentlichen Verformung der Wälzlager führen, die Lagerfunktion im Wesentlichen von den reibungsarm arbeitenden Wälzlagern übernommen wird, wohingegen bei hoher Lagerbelastung zusätzlich das Gleitlager in Funktion tritt und die Wälzlager vor einer Überlastung schützt. Auf diese Weise werden die Vorteile der Wälzlager mit denen von Gleitlagern vereint und die nachteiligen Eigenarten beider Lagerarten weitgehend unterdrückt.

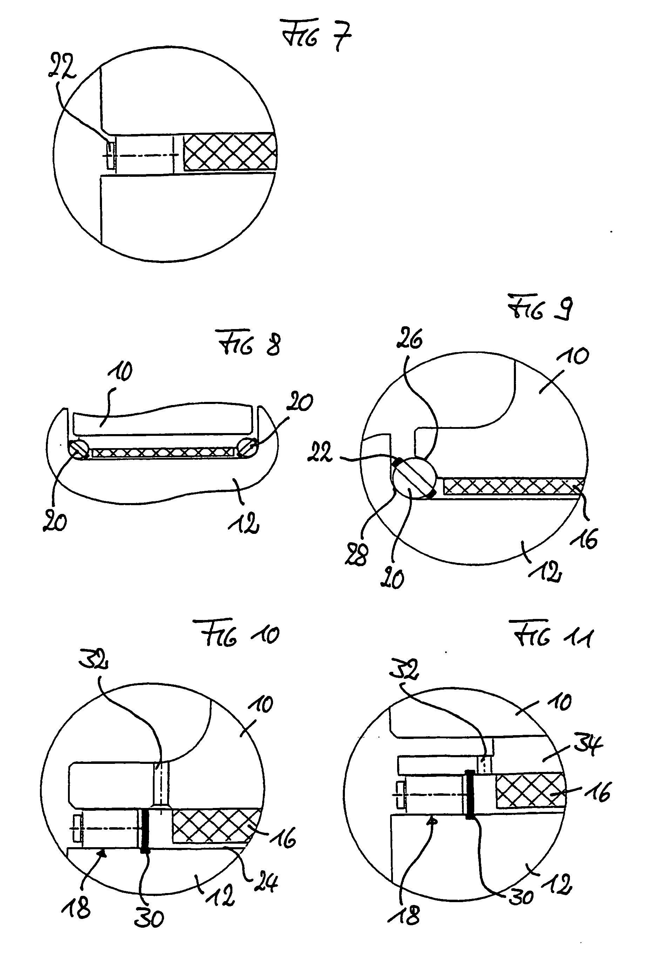

Die Figur 7 zeigt eine Abänderung der Figuren 3 und 4, bei der der Käfig 22 des Wälzlagers nur an der vom Gleitlager abgewandten Seite des Wälzlagers angeordnet ist. Es versteht sich, dass das rechtsseitige Wälzlager 18 (Figur 2) spiegelsymmetrisch zu den dargestellten Wälzlagern ausgebildet sein kann.

Figur 8 zeigt eine der Figur 2 ähnliche Ansicht einer abgeänderten Ausführungsform der Lagerung.

Die Wälzlagerkäfige 22 bzw. Wälzkörperkäfige, die der Lagesicherung der Wälzkörper dienen, können beispielsweise aus Aluminium, Stahl oder Kunststoff oder einer Kombination dieser Werkstoffe bestehen.

Figur 9 zeigt eine abgeänderte Ausführungsform einer Lagerung in einer der Figur 2 ähnlichen Ansicht. Bei dieser Ausführungsform werden als Wälzkörper 20 Kugeln eingesetzt, die zusammen mit entsprechend gestalteten Laufflächen an dem Kurbelzapfen 12 und dem Pleuel 10 integrierte Schrägkugellager bilden, die neben der radialen Abstützung auch eine axiale Führung zwischen Pleuel und Kurbelzapfen übernehmen. Wie aus den Figuren 8 und 9 ersichtlich, sind Schultern 26 des Pleuels 10 derart gestaltet, dass sie schräg auswärts gerichtete Laufflächen bilden, wohingegen seitliche Schulterbereiche 28 des Kurbelzapfens 12 radial nach außen und schräg einwärts gerichtete Laufflächen für die Kugeln 20 bilden.

Figur 10 zeigt eine Anordnung ähnlich der Figur 7, wobei zwischen der Lagerschale 16 des Gleitlagers und dem Wälzlager 18 eine insgesamt ringförmige Trennwand 30 ausgebildet ist, die verhindert, dass dem Schmierspalt 24 zugeführtes Schmiermittel das Wälzlager 18 überschwemmt. Das dem Schmierspalt 24 beispielsweise durch die Kurbelwelle hindurch zugeführte Schmiermittel kann durch eine Ablaufbohrung 32 des Pleuels 10 ablaufen.

Bei der Ausführungsform gemäß Figur 11 ist das Pleuel 10 mit einem Lagerring 34 versehen, der eine äußere Lagerschale des Wälzlagers 18 bildet und in den die Lagerschale 16 des Gleitlagers eingesetzt ist.

Die Dimensionierung der Wälzlager und des Gleitlagers erfolgt abhängig von den von der Lagerung zu übertragenden radialen Kräften und den auftretenden Drehzahlen bzw. Relativgeschwindigkeiten, die das Tragvermögen des Schmierspalts 24 bestimmen. Insbesondere ist die Dimensionierung derart, dass die Dicke s des Schmierspalts 24 bei nicht oder nur unwesentlich verformten Wälzkörpern und gegebenenfalls zugehörigen Gegenflächen der relativ zueinander verdrehbaren, zu lagernden Bauteile größer ist als die Dicke, bei der der Schmierspalt dynamisches Tragvermögen entwickelt (oberer Bereich des Schmierspaltes gemäß Figur 6).

Die beschriebene Lagerung, die eine Kombination aus Gleitlager und Wälzlager ist, kann in vielfältiger Weise abgeändert werden. Beispielsweise kann ein Wälzlager zwischen zwei Gleitlagern angeordnet werden oder es können mehrere Wälzlager und Gleitlager axial benachbart gleichachsig angeordnet werden. Die mittels des kombinierten Lagers relativ zueinander drehbaren Bauteile können abgestufte Lagerflächen haben, so dass der Durchmesser der Wälzkörper unterschiedlich zur Summe aus der Dicke der Lagerschale 16 und dem Spaltmaß des Schmierspaltes 24 sein kann. Die Wälzlager können als Rillenlager ausgebildet sein usw. Die beschriebene symmetrische Anordnung hat den Vorteil, dass von der Lagerung keine Kippmomente auf die zu lagernden Bauteile eingeleitet werden.

Bei den beschriebenen Beispielen eignet sich die Lagerkonstruktion gemäß den Figuren 3, 4 und 7 besonders vorteilhaft zur Lagerung einer Kurbelwelle an einem Kurbelgehäuse, d.h. für ein Hauptlager der Kurbelwelle, während sich die Konstruktion gemäß den Figuren 8 und 9 besonders gut zur Lagerung eines Pleuels an einer Kurbel der Kurbelwelle eignet. Ein kombiniertes Gleit- und Wälzlager kann auch zur Lagerung des Pleuels am Kolben verwendet werden.

Eine Trennwand ähnlich der Trennwand 30 gemäß den Figuren 10 und 11 zur Abschottung des Wälzlagers gegenüber dem Gleitlager kann bei allen kombinierten Lagern eingesetzt werden.

### Bezugszeichenliste

- 10: Pleuel
- 12: Kurbelzapfen
- 14: Gleitlager
- 16: Lagerschale
- 18: Wälzlager
- 20: Wälzkörper
- 22: Käfig
- 24: Schmierspalt
- 26: Schulter
- 28: Schulterbereich
- 30: Trennwand
- 32: Ablaufbohrung
- 34: Lagerring

## Patentansprüche

1. Kombiniertes Wälz- und Gleitlager, enthaltend ein Gleitlager (14) mit einer Außenschale und einer Innenschale, sowie wenigstens ein Wälzlager (18) mit einer Außenschale, einer Innenschale und dazwischen angeordneten, von einem Käfig (22) gehaltenen Wälzkörpern (20), wobei das Gleitlager und das Wälzlager axial benachbart mit gleicher Drehachse (A) angeordnet sind, die Außenschalen mit einem ersten Bauteil (10), die Innenschalen mit einem zweiten, relativ zum ersten Bauteil um die Drehachse drehbaren Bauteil (12) verbunden sind und die Lagerung der relativ zueinander verdrehbaren Bauteile (10, 12) bei normaler radialer Last zwischen den Bauteilen mittels des Wälzlagers (18) erfolgt und das Gleitlager (14) einen mit Schmiermittel gefüllten, zwischen der Außenschale und der Innenschale ausgebildeten, ringförmigen Schmierspalt (24) aufweist, dessen radiale Dicke bei normaler radialer Last durch den radialen Durchmesser der Wälzkörper (20) des Wälzlagers (18) bestimmt ist,
**dadurch gekennzeichnet, dass**
der die Wälzkörper (20) haltende Käfig (22) von dem Gleitlager (14) getrennt ist und
die Dicke s des Schmierspaltes (24) bei nicht oder nur unwesentlich verformtem Wälzlager derart ist, dass das Gleitlager bei einer elastischen Verformung des Wälzlagers infolge hoher radialer Last zwischen den Bauteilen und damit einhergehender Abnahme der Dicke des Schmierspaltes in einem Umfangsbereich wegen des sich infolge der Relativdrehzahl zwischen dem ersten und dem zweiten Bauteil (10, 12) entwickelnden dynamischen Tragvermögens des Schmierspalts Lagerfunktion übernimmt.

2. Lager nach Anspruch 1, wobei das Gleitlager (14) zwischen zwei axial benachbarten Wälzlagern (18) angeordnet ist.

3. Lager nach Anspruch 1 oder 2, wobei die Wälzkörper (20) elastisch verformbar sind.

4. Lager nach einem der Ansprüche 1 bis 3, wobei die Wälzkörper (20) zylindrisch ausgebildet sind.

5. Lager nach Anspruch 1 bis 4, wobei die Wälzkörper (20) hohlzylindrisch ausgebildet sind.

6. Lager nach Anspruch 3, wobei die Wälzlager (18) als Schrägkugellager ausgebildet sind, die eine axiale Verschiebung zwischen dem ersten und dem zweiten Bauteil (10, 12) verhindern.

7. Lager nach einem der Ansprüche 1 bis 6, wobei zwischen dem Gleitlager (14) und dem Wälzlager (18) eine Trennwand (30) angeordnet ist, die einen Übertritt von dem Gleitlager zugeführten Schmiermittel in das Wälzlager begrenzt.

8. Lager nach einem der Ansprüche 1 bis 7, wobei wenigstens eine der Schalen des Wälzlagers (18) oder Gleitlagers (14) durch eine Innen- oder Außenfläche eines der Bauteile (10, 12) gebildet ist.

9. Lager nach einem der Ansprüche 1 bis 8, wobei das erste Bauteil (12) eine Kurbelwelle und das zweite Bauteil (10) ein die Kurbelwelle mit einem Kolben verbindendes Pleuel ist.

10. Lager nach einem der Ansprüche 1 bis 9, wobei das erste Bauteil (12) ein Kurbelgehäuse und das zweite Bauteil (10) eine Kurbelwelle ist.

## Claims

1. A combined rolling and sliding bearing, comprising a sliding bearing (14) having an outer shell and an inner shell, as well as at least one rolling bearing (18) having an outer shell, an inner shell, and roller bodies (20), which are arranged between said shells and supported by a cage (22), wherein the sliding bearing and the rolling bearing are arranged axially adjacent to each other on the same axis of rotation (A), the outer shells are connected to a first component (10), the inner shells are connected to a second component (12), which is rotatable around the axis of rotation relative to the first component, and the support of the components (10, 12), which are rotatable relative to each other, is effected via the rolling bearing (18) at normal radial load between the components, and the sliding bearing (14) has an annular lubrication gap (24) formed between the outer shell and the inner shell, which gap is filled with lubricant and whose radial thickness, at normal radial load, is defined by the radial diameter of the roller bodies (20) of the rolling bearing (18),
**characterized in that**
the cage (22) supporting the roller bodies (20) is separated from the sliding bearing (14) and the thickness s of the lubrication gap (24), with the rolling bearing being not or only marginally deformed, is such that, in case of elastic deformation due to a high radial load between the components and an accompanying reduction of the thickness of the lubrication gap in a circumferential portion, the sliding bearing takes over a supporting function due to the dynamic load-bearing capacity of the lubrication gap, which is generated due to the relative rotational speed between the first and second components (10, 12).

2. The bearing according to claim 1, wherein the sliding bearing (14) is arranged between two axially adjacent rolling bearings (18).

3. The bearing according to claim 1 or 2, wherein the roller bodies (20) are elastically deformable.

4. The bearing according to one of claims 1 to 3, wherein the roller bodies (20) are formed as cylinders.

5. The bearing according to claims 1 to 4, wherein the roller bodies (20) are formed as hollow cylinders.

6. The bearing according to claim 3, wherein the rolling bearings (18) are formed as inclined ball bearings, which prevent an axial displacement between the first and second components (10, 12).

7. The bearing according to one of claims 1 to 6, wherein a dividing wall (30) is arranged between the sliding bearing (14) and the rolling bearing (18), which dividing wall delimits a transfer of lubricant supplied to the sliding bearing to the rolling bearing.

8. The bearing according to one of claims 1 to 7, wherein at least one of the shells of the rolling bearing (18) or the sliding bearing (14) is formed by an inner or outer surface of one of the components (10, 12).

9. The bearing according to one of claims 1 to 8, wherein the first component (12) is a crankshaft and the second component (12) is a piston rod connecting the crankshaft to a piston.

10. The bearing according to one of claims 1 to 9, wherein the first component (12) is a crankcase and the second component (10) is a crankshaft.

## Revendications

1. Palier à roulement et palier lisse combiné, comprenant un palier lisse (14) avec une coquille extérieure et une coquille intérieure, ainsi qu'au moins un palier à roulement (18) avec une coquille extérieure, une coquille intérieure et des corps de roulement (20) disposés entre celles-ci et retenus par une cage (22), dans lequel le palier lisse et le palier à roulement sont disposés à proximité axiale l'un de l'autre avec le même axe de rotation (A), les coquilles extérieures sont assemblées à un premier composant (10), les coquilles intérieures sont assemblées à un deuxième composant (12) pouvant tourner autour de l'axe de rotation par rapport au premier composant, et le soutien des composants (10, 12) pouvant tourner l'un par rapport à l'autre est assuré au moyen du palier à roulement (18) sous une charge radiale normale et le palier lisse (14) présente une fente de lubrification (24), formée entre la coquille extérieure et la coquille intérieure et remplie de lubrifiant, dont l'épaisseur radiale sous une charge radiale normale est déterminée par le diamètre radial des corps de roulement (20) du palier à roulement (18), **caractérisé en ce que** la cage (22) retenant les corps de roulement (20) est séparée du palier lisse (14) et l'épaisseur s de la fente de lubrification (24), lorsque le palier à roulement n'est pas ou n'est qu'insensiblement déformé, est telle que le palier lisse reprenne la fonction de palier en cas de déformation élastique du palier à roulement par suite d'une charge radiale plus élevée entre les composants et donc d'une diminution résultante de l'épaisseur de la fente de lubrification dans une zone périphérique à cause de la charge admissible dynamique de la fente de lubrification se développant par suite de la vitesse de rotation relative entre le premier et le deuxième composants (10, 12).

2. Palier selon la revendication 1, dans lequel le palier lisse (14) est disposé entre deux paliers à roulement (18) axialement voisins.

3. Palier selon la revendication 1 ou 2, dans lequel les corps de roulement (20) sont déformables élastiquement.

4. Palier selon l'une quelconque des revendications 1 à 3, dans lequel les corps de roulement (20) sont de forme cylindrique.

5. Palier selon l'une quelconque des revendications 1 à 4, dans lequel les corps de roulement (20) sont cylindriques creux.

6. Palier selon la revendication 3, dans lequel les paliers à roulement (18) se présentent sous la forme de roulements à billes à portée oblique, qui empêchent un déplacement axial entre le premier et le deuxième composants (10, 12).

7. Palier selon l'une quelconque des revendications 1 à 6, dans lequel il se trouve entre le palier lisse (14) et le palier à roulement (18) un paroi de séparation (30), qui limite un débordement de lubrifiant fourni au palier lisse vers le palier à roulement.

8. Palier selon l'une quelconque des revendications 1 à 7, dans lequel au moins une des coquilles du palier à roulement (18) ou du palier lisse (14) est formée par une face intérieure ou extérieure d'un des composants (10, 12).

9. Palier selon l'une quelconque des revendications 1 à 8, dans lequel le premier composant (12) est un vilebrequin et le deuxième composant (10) est une bielle reliant le vilebrequin à un piston.

10. Palier selon l'une quelconque des revendications 1 à 9, dans lequel le premier composant (12) est un carter de vilebrequin et le deuxième composant (10) est un vilebrequin.
